# EUROPÄISCHE PATENTANMELDUNG

(11) **EP 2 006 119 A2**
(43) Veröffentlichungstag der Anmeldung: **24.12.2008**
(21) Anmeldenummer: 07023011.5
(22) Anmeldetag: 28.11.2007
(51) Int. Cl.: B44C 1/22, B44C 3/00

(54) **Vefahren zur Herstellung eines beschrifteten Kunststoff-Formteils sowie beschriftetes Kunststoff-Formteil**

(30) Priorität: 23.06.2007 DE 102007029007
(71) Anmelder: Albea Kunstofftechnik GmbH, 77960 Seelbach (DE)
(72) Erfinder: Lenz, Peter, 77948 Friesenheim (DE); Dombrowski, Frank, 77960 Seelbach (DE)
(74) Vertreter: Maucher, Wolfgang

(57) **Zusammenfassung**

Die Erfindung betrifft ein Verfahren zur Herstellung eines beschrifteten oder mit Kennzeichen (7) versehenen Kunststoff-Formteiles (1) aus einer unverformten Kunststofffolie (2), auf die auf mindestens eine Flachseite in einem ersten Verfahrensschritt zumindest bereichsweise wenigstens eine Farb- (3,4) und/oder Deckschicht (5) aufgebracht wird und die in einem nachfolgenden Verfahrensschritt zum Kunststoff-Formteil verformt oder unverformt weiter bearbeitet wird. Dabei ist für das erfindungsgemäße Verfahren kennzeichnend, dass von dem mit wenigstens einer Farb- und/oder Deckschicht versehenen Kunststoff-Formteil anschließend mindestens eine Farb- und/oder Deckschicht bereichsweise in Form der festgelegten Kennzeichen abgetragen und eine darunter liegende Farb- und/oder Folienschicht freigelegt wird. Das erfindungsgemäße Verfahren erlaubt die kostengünstige und präzise Herstellung von bedruckten Kunststoff-Formteilen, wie sie beispielsweise als Messinstrumentenscheiben benötigt werden. Die Erfindung betrifft auch ein solches Kunststoff-Formteil.

## Beschreibung

Die Erfindung betrifft ein Verfahren zur Herstellung eines beschrifteten oder mit dergleichen Kennzeichen versehenen Kunststoff-Formteiles aus einer unverformten Kunststofffolie. Die Erfindung befasst sich auch mit einem Kunststoff-Formteil, das durch Verformen einer, mit zumindest einer Farb- und/oder Deckschicht versehenen Kunststofffolie hergestellt ist.

Kunststoff-Formteile der eingangs erwähnten Art werden beispielsweise als Tacho- oder dergleichen Messinstrumentenscheiben in Messinstrumenten und insbesondere Kraftfahrzeug-Messinstrumenten benötigt. Die vorbekannten, meist runden Messinstrumentenscheiben weisen eine Messeinteilung und gegebenenfalls auch weitere Anzeigen, wie zum Beispiel Warnsymbole, oder dergleichen Kennzeichen auf. In Verbindung mit einem Instrumentenzeiger, der proportional zum aktuellen Messwert ausschlägt, kann der Anwender den aktuell gemessenen Messwert auf der Messinstrumentenscheibe ablesen. Die Herstellung solcher Messinstrumentenscheiben ist bislang noch mit einem vergleichsweise hohen Aufwand verbunden. Dabei werden die auf der Messinstrumentenscheibe benötigten Kennzeichen zunächst zum Beispiel im Siebdruckverfahren auf eine Kunststofffolie aufgedruckt, bevor das entsprechende Kunststoff-Formteil durch Verformen in seine, der Messinstrumentenscheibe entsprechende Form gebracht und das als Messinstrumentenscheibe fertiggestellte Kunststoff-Formteil aus der Kunststofffolie ausgestanzt werden kann. Dabei besteht die Gefahr, dass die auf die Kunststofffolie aufgedruckten Kennzeichen beschädigt beziehungsweise verzerrt werden, wenn die bedruckte Kunststofffolie den zur Herstellung der Messinstrumentenscheibe benötigten weiteren Herstellungsschritten zugeführt wird.

Es besteht daher insbesondere die Aufgabe, ein Verfahren zur Herstellung eines beschrifteten Kunststoff-Formteiles sowie ein Kunststoff-Formteil der eingangs erwähnten Art zu schaffen, das einen besonders einfachen und kostengünstigen Herstellungsvorgang mit möglichst geringem Ausschuß erlaubt. Die erfindungsgemäße Lösung besteht bei dem Verfahren der eingangs erwähnten Art in den Merkmalen des geltenden Patentanspruchs 1.

Bei dem erfindungsgemäßen Verfahren wird zunächst auf eine meist unbedruckte und unverformte Kunststofffolie in einem ersten Verfahrensschritt flachseitig zumindest bereichsweise wenigstens eine Farb- und/oder Deckschicht flächig aufgebracht, bevor die mit einer solchen flächigen Farb- und/oder Deckschicht versehene Kunststofffolie in einem nachfolgenden Verfahrensschritt zum Kunststoff-Formteil verformt oder unverformt weiter bearbeitet wird. Von dem mit wenigstens einer Farb- und/oder Deckschicht versehenen Kunststoff-Formteil wird anschließend wenigstens eine Farb- und/oder Deckschicht bereichsweise in Form der festgelegten Kennzeichen abgetragen und entweder eine darunter liegende Farbschicht oder die Folienschicht der zur Herstellung des Kunststoff-Formteiles verwendeten Kunststofffolie freigelegt. Durch den Farbkontrast der Farben im Bereich der freigelegten Farb- oder Folienschichten wird nun das Schriftbild oder dergleichen Kennzeichnung sichtbar. Durch eine hinter dem Kunststoff-Formteil angebrachte Lichtquelle lässt sich erforderlichenfalls auch ein Nachtdesign oder beispielsweise auch ein hintergrundbeleuchtetes Messinstrument realisieren.

Um die auf dem Kunststoff-Formteil benötigten Kennzeichen erforderlichenfalls auch in unterschiedlichen Farben herstellen zu können und um beispielsweise eine Messinstrumentenscheibe zu fertigen, die unerwünscht hohe Messwerte in einer bestimmten Signalfarbe wiedergibt, ist es vorteilhaft, wenn auf die Kunststofffolie Teilbereiche in unterschiedlichen Farben aufgebracht werden und wenn auf die aus unterschiedlichen Farben bestehenden Teilbereiche der Kunststofffolie eine sichtseitige Ober- oder Deckschicht aufgebracht wird. Dabei kann die Ober- oder Deckschicht beispielsweise als matte und insbesondere als dunkle Farbschicht ausgestaltet sein, um Oberflächenreflektionen beim Blick auf das Kunststoff-Formteil und insbesondere auf das als Messinstrumentenscheibe ausgebildete Kunststoff-Formteil zu vermeiden.

Um den mit dem erfindungsgemäßen Verfahren verbundenen geringen Aufwand noch zusätzlich zu reduzieren, ist es vorteilhaft, wenn die zumindest eine Farb- und/oder Deckschicht im Siebdruckverfahren auf die Kunststofffolie aufgebracht wird.

Um von dem mit wenigstens einer Farb- und/oder Deckschicht versehenen Kunststoff-Formteil anschließend mindestens eine Farb- und/oder Deckschicht bereichsweise in Form der festgelegten Kennzeichen abtragen und um die auf dem Kunststoff-Formteil benötigten Kennzeichen möglichst präzise herausarbeiten zu können, ist es vorteilhaft, wenn die mindestens eine Farb- und/oder Deckschicht mit Hilfe eines Lasers abgetragen wird.

Die zur Herstellung verwendete Kunststofffolie lässt sich besonders einfach in die gewünschte Form bringen, wenn die Kunststofffolie im Tiefziehverfahren oder durch Hochdruckverformen oder andere formgebende Verfahren zum Kunststoff-Formteil verformt wird.

Besonders vorteilhaft ist es, wenn das Kunststoff-Formteil in einem nachfolgenden und/oder abschließenden Verfahrensschritt von der Kunststofffolie abgetrennt und/oder aus der Kunststofffolie ausgestanzt wird. Mit dem Abtrennen oder Ausstanzen des Kunststoff-Formteiles aus der verwendeten Kunststofffolie wird das beispielsweise als Messinstrumentenscheibe benötigte Kunststoff-Formteil fertiggestellt.

Bei dem Kunststoff-Formteil der eingangs erwähnten Art besteht die erfindungsgemäße Lösung in den Merkmalen des geltenden Patentanspruchs 7.

Um bei einem hintergrundbeleuchteten Kunststoff-Formteil die aus den Farb- und/oder Deckschichten herausgearbeiteten Kennzeichen besonders auffällig hervortreten zu lassen, ist es vorteilhaft, wenn die Ober- oder Deckschicht undurchsichtig oder lichtundurchlässig ist.

Um ein Nachtdesign oder ein hintergrundbeleuchtetes Kunststoff-Formteil zu realisieren, ist es vorteilhaft, wenn die Kunststofffolie und/oder zumindest eine auf der sie aufgebrachten Farbschichten lichtdurchlässig ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Anhand der Figuren 1 bis 6 ist ein Verfahren zur Herstellung eines, mit einem Schriftbild oder dergleichen Kennzeichen versehenen und beispielsweise als Messinstrumentenscheibe benötigten Kunststoff-Formteiles in seinen einzelnen Verfahrensschritten dargestellt, wobei
- Fig. 1: die zur Herstellung des Kunststoff-Formteiles verwendete, unverformte Kunststofffolie zeigt,
- Fig. 2: die mit Teilbereichen aus verschiedenen Farbschichten versehene Kunststofffolie zeigt, wobei auf die verschiedenen Farbschichten eine obere Deckschicht aufgetragen ist,
- Fig. 3: die durch Tiefziehen oder durch Hochdruckverformen oder andere formgebende Verfahren in das gewünschte Kunststoff-Formteil verformte Kunststofffolie zeigt,
- Fig. 4: das mit einer Kennzeichnung versehene Kunststoff-Formteil zeigt, wobei die Kennzeichnung durch bereichsweises Abtragen der oberen Deckschicht und Freilegen der darunter liegenden Farbschichten herausgearbeitet ist,
- Fig. 5: das mit einer Hintergrundbeleuchtung versehene Kunststoff-Formteil zeigt und
- Fig. 6: das Kunststoff-Formteil in einer Draufsicht zeigt. Zum Herstellen eines beispielsweise als Messinstrumentenscheibe benötigten Kunststoff-Formteiles 1 wird eine unverformte und in Figur 1 näher dargestellte Kunststofffolie 2 verwendet, die zunächst auch unbedruckt sein kann.

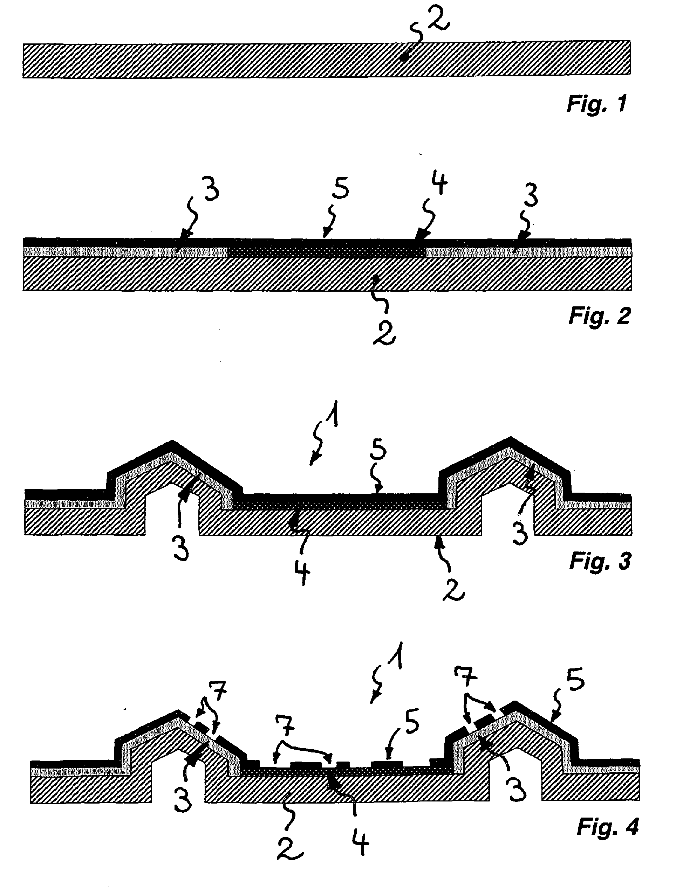

Auf diese Kunststofffolie 2 werden in einem ersten Verfahrensschritt verschiedene Farbschichten 3, 4 aufgetragen, die unterschiedliche Teilbereiche der Folienoberfläche überdecken. Wie aus dem Querschnitt in Figur 2 deutlich wird, wird auf die die Folienoberfläche vollständig überdeckenden Farbschichten 3, 4 eine Deck- oder Oberschicht 5 aufgetragen. Die Farb- und Deckschichten 3, 4, 5 können beispielsweise im Siebdruckverfahren auf die Kunststofffolie 2 aufgebracht werden.

Die mit den Farb- und Deckschichten 3, 4, 5 versehene Kunststofffolie 2 wird anschließend in die endgültige Form gebracht und zum Kunststoff-Formteil 1 verformt. Dabei kann das Verformen der Kunststofffolie 2 durch Tiefziehen oder Hochdruckverformen oder anderen formgebenden Verfahren erfolgen. Das beispielsweise im Tiefziehverfahren in Form gebrachte Kunststoff-Formteil 1 ist in Figur 3 näher dargestellt.

In einem nachfolgenden und anhand von Figur 4 näher erläuterten Verfahrensschritt wird von dem mit den Farb- und Deckschichten 3, 4, 5 versehenen Kunststoff-Formteil 1 anschließend die Deckschicht 5 bereichsweise abgetragen und die darunter liegende Farbschicht 3 oder 4 freigelegt. Da das Abtragen nur bereichsweise und nur in Form der festgelegten Kennzeichen erfolgt, werden diese Kennzeichen durch den Farbkontrast zwischen den Farb- und Deckschichten 3, 4, 5 nun sichtbar. Dabei kann das bereichsweise Abtragen der Deckschicht 5 mit Hilfe eines Lasers erfolgen, der das Schriftbild oder dergleichen Kennzeichnung 7 konturenscharf und positionsgenau sowie verzugsfrei aus der Deckschicht 5 herausarbeiten kann. Durch Abtragen der Deckschicht und Freilegen der unter der Deckschicht 5 befindlichen Farbschichten 3 oder 4 können die Schriftbilder 7 beziehungsweise Symbole oder auch eine Skalierung sichtbar gemacht werden. In Figur 4 ist das Kunststoff-Formteil mit den aus seinen Farb- und Deckschichten 3, 4, 5 herausgearbeiteten Kennzeichnungen 7 dargestellt.

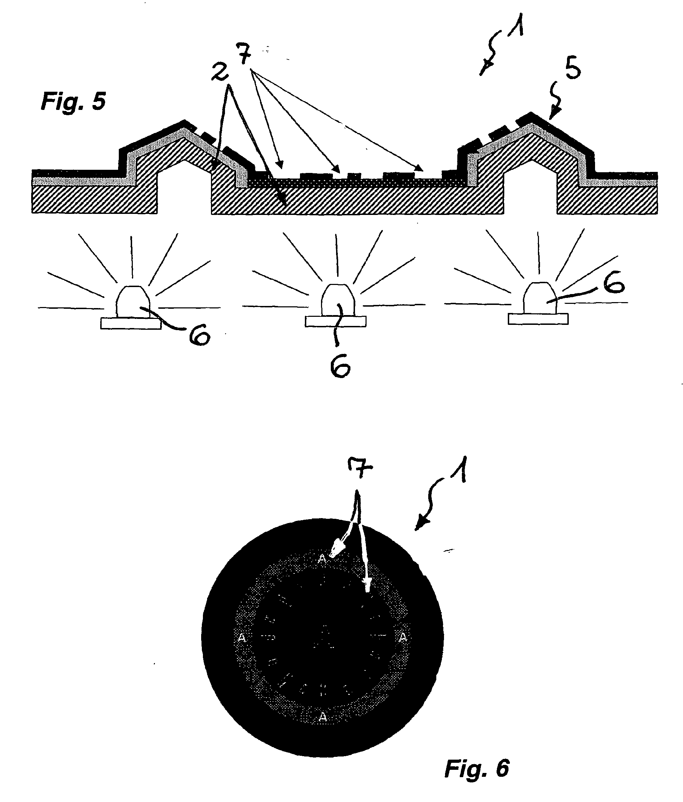

Mit dem dreidimensional verformten Kunststoff-Formteil 1 kann auch ein Nachtdesign realisiert werden, wenn auf der den Farb- und Deckschichten 3, 4, 5 abgewandten Seite des Kunststoff-Formteiles 1 zumindest eine Lichtquelle 6 als Hintergrundbeleuchtung vorgesehen ist. In Figur 5 ist das Kunststoff-Formteil in einem solchen Nachtdesign dargestellt. Aus Figur 5 wird deutlich, dass die Kunststofffolie 2 und die auf die Kunststofffolie 2 aufgebrachten Farbschichten 3, 4 lichtdurchlässig ausgestaltet sein können, während die Deckschicht 5 hier undurchsichtig und lichtundurchlässig ist. Um Oberflächenreflektionen zu vermeiden, kann es vorteilhaft sein, wenn die Deckschicht 5 eine dunkle Farbschicht und insbesondere eine matte Farbschicht ist.

In Figur 6 ist das als Messinstrumentenscheibe bestimmte Kunststoff-Formteil 1 in einer Draufsicht gezeigt. Dabei ist das Kunststoff-Formteil 1 von allen nicht-benötigten Teilbereichen der Kunststofffolie 2 befreit. Das Kunststoff-Formteil kann dazu nach dem Verformen und gegebenenfalls auch nach dem Abtragen der Farb- und Deckschichten 5 aus der verwendeten Kunststofffolie 2 herausgeschnitten oder ausgestanzt werden.

## Patentansprüche

1. Verfahren zur Herstellung eines beschrifteten oder mit dergleichen Kennzeichen (7) versehenen Kunststoff-Formteiles (1) aus einer unverformten Kunststofffolie (2), auf die auf mindestens eine Flachseite in einem ersten Verfahrensschritt zumindest bereichsweise wenigstens eine Farb- und/oder Deckschicht (3, 4, 5) aufgebracht wird und die (2) in einem nachfolgenden Verfahrensschritt zum Kunststoff-Formteil (1) verformt oder nicht verformt weiter bearbeitet wird, wobei von dem mit wenigstens einer Farb- und/oder Deckschicht (3, 4, 5) versehenen Kunststoff-Formteil (1) anschließend mindestens eine Farb- und/oder Deckschicht (5) bereichsweise in Form der festgelegten Kennzeichen (7) abgetragen und eine darunter liegende Farb- oder Folienschicht (3, 4) freigelegt wird, wobei die Laserung vorder-, rückseitig oder beidseitig durchgeführt werden kann.

2. Verfahren nach Anspruch 1, **dadurch gekennzeichnet, dass** auf die Kunststofffolie (2) Teilbereiche in-unterschiedlichen Farben (3, 4) aufgebracht werden, und dass auf die mit Teilbereichen (3, 4) aus unterschiedlichen Farben versehene Kunststofffolie (2) eine sichtseitige Ober- oder Deckschicht (5) aufgebracht wird.

3. Verfahren nach Anspruch 1 oder 2, **dadurch gekennzeichnet, dass** die zumindest eine Farb- und/oder Deckschicht (3, 4, 5) im Siebdruckverfahren auf die Kunststofffolie (2) aufgebracht wird.

4. Verfahren nach einem der Ansprüche 1 bis 3, **dadurch gekennzeichnet, dass** die mindestens eine Farb- und/oder Deckschicht (3, 4, 5) mit Hilfe eines Lasers abgetragen wird.

5. Verfahren nach einem der Ansprüche 1 bis 4, **dadurch gekennzeichnet, dass** die Kunststofffolie (2) im Tiefziehverfahren oder durch Hochdruckverformen oder andere formgebende Verfahren zum Kunststoff-Formteil (1) verformt wird.

6. Verfahren nach einem der Ansprüche 1 bis 5, **dadurch gekennzeichnet, dass** das Kunststoff-Formteil (1) in einem nachfolgenden und/oder abschließenden Verfahrensschritt von der Kunststofffolie (2) abgetrennt und/oder aus der Kunststofffolie (2) ausgestanzt wird.

7. Kunststoff-Formteil (1), das durch Verformen einer, mit zumindest einer Farb- und/oder Deckschicht (3, 4, 5) versehenen Kunststofffolie (2) insbesondere im Verfahren gemäß den Ansprüchen 1 bis 6 hergestellt ist, wobei aus der Farb- und/oder Deckschicht (3, 4, 5) zumindest ein Schrift- oder dergleichen Kennzeichen durch bereichsweises Abtragen mindestens einer Farb- und/oder Deckschicht (3, 4, 5) und Freilegen einer darunter liegenden Farb- oder Folienschicht herausgearbeitet ist.

8. Verfahren oder Kunststoff-Formteil nach einem der vorstehenden Ansprüche, **dadurch gekennzeichnet, dass** die Ober- oder Deckschicht (5) undurchsichtig und/oder lichtundurchlässig ist.

9. Verfahren oder Kunststoff-Formteil nach einem der vorstehenden Ansprüche, **dadurch gekennzeichnet, dass** die Kunststofffolie (2) und/oder zumindest eine der auf sie aufgebrachten Farbschichten (3, 4) lichtdurchlässig ist.
